(19) Europäisches Patentamt
European Patent Office
Office européen des brevets

(11) **EP 3 362 331 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **16781361.7**

(22) Anmeldetag: **10.10.2016**

(51) Int Cl.:
**B60T 8/17** *(2006.01)* **B60T 8/1755** *(2006.01)*

(86) Internationale Anmeldenummer:
**PCT/EP2016/074161**

(87) Internationale Veröffentlichungsnummer:
**WO 2017/063984 (20.04.2017 Gazette 2017/16)**

(54) **VERFAHREN ZUR VORAUSSCHAUENDEN UMKIPPVERHINDERUNG EINES FAHRZEUGS**

METHOD FOR PREDICTIVE ROLLOVER PREVENTION OF A VEHICLE

PROCÉDÉ POUR EMPÊCHER PRÉVENTIVEMENT LE BASCULEMENT D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2015 DE 102015013143**

(43) Veröffentlichungstag der Anmeldung:
**22.08.2018 Patentblatt 2018/34**

(73) Patentinhaber: **KNORR-BREMSE Systeme für Nutzfahrzeuge GmbH**
**80809 München (DE)**

(72) Erfinder:
• **JUNDT, Oliver**
**74394 Hessigheim (DE)**
• **THUM, Daniel**
**81927 München (DE)**
• **LEIBBRAND, Jonas**
**71735 Eberdingen-Nussdorf (DE)**

(56) Entgegenhaltungen:
**EP-A1- 2 599 676        WO-A1-2004/110809**
**WO-A1-2009/083749    DE-A1- 19 543 551**
**DE-A1-102009 000 397    DE-A1-102011 017 588**
**US-B1- 8 554 468**

**Beschreibung**

Die Erfindung betrifft ein Verfahren zur Umkippverhinderung eines Fahrzeugs oder einer Zugfahrzeug-Anhängerkombination in Kurven, gemäß dem Oberbegriff von Anspruch 1.

Die Erfindung betrifft auch gemäß Anspruch 11 eine Vorrichtung zur Umkippverhinderung eines Fahrzeugs oder einer Zugfahrzeug-Anhängerkombination in Kurven, welche durch ein Verfahren nach Anspruch 1 gesteuert ist.

Moderne Fahrzeuge, insbesondere moderne Nutzfahrzeuge sind in der Regel mit einem Elektronischen Stabilitätsprogramm (ESP) ausgestattet, welches versucht, instabile Fahrsituationen wie Schleudern zu vermeiden. Da insbesondere Nutzfahrzeuge aufgrund ihrer Beladungssituation oft einen hohen Schwerpunkt aufweisen, weist das ESP von Nutzfahrzeugen als Teilfunktion ein Rollstabilitätsprogramm (RSP) oder eine Roll Stability Control (RSC) auf, welche versucht, das Fahrzeug insbesondere bei Kurvenfahrt vor dem Umkippen zu bewahren. Bei einem solchen Rollstabilitätsprogramm (RSP) werden aktuelle Fahrsituationsdaten wie gemessene Geschwindigkeit, gemessener Lenkradwinkel und gemessene Querbeschleunigung wie auch die Beladung berücksichtigt. Erreicht das Fahrzeug eine auf der Basis der Fahrsituationsdaten sowie der Beladung ermittelte umkippkritische Querbeschleunigung wird im Rahmen der Teilfunktion RSP des ESP durch Motor- und/oder Bremseingriffe und/oder Lenkeingriffe die Geschwindigkeit bzw. der Lenkwinkel des Fahrzeugs ohne Zutun des Fahrers soweit korrigiert, bis keine Umkippgefahr mehr besteht. Da das ESP bzw. dessen Teilfunktion RSP aber nur aufgrund der momentanen Fahrsituation eingreifen kann, dabei aber der weitere Verlauf der Fahrstrecke nicht berücksichtigt wird, kann das ESP bzw. dessen Teilfunktion RSP lediglich sehr kurze Zeit vor dem Umkippen eingreifen. Diese Strategie kann aber dazu führen, dass die Geschwindigkeit bzw. die Querbeschleunigung bzw. der Lenkwinkel des Fahrzeugs nicht schnell genug korrigiert werden kann, um ein Umkippen des Fahrzeugs wirksam zu verhindern, vor allem dann, wenn durch die Querbeschleunigung die Aufstandskraft der kurveninneren Räder deutlich abgenommen hat und somit wenig Seitenführungs- bzw. Bremskraft auf die Fahrbahn übertragen werden kann.

Ein gattungsgemäßes Verfahren ist aus WO 2004/110809 A1 bekannt.

Der Erfindung liegt die Aufgabe zugrunde, ein Verfahren und eine Vorrichtung der eingangserwähnten Art derart fortzubilden, dass ein Umkippen des Fahrzeugs mit höherer Sicherheit verhindert wird.

Diese Aufgabe wird erfindungsgemäß durch die Merkmale von Anspruch 1 und Anspruch 11 gelöst.

Offenbarung der Erfindung

Das Verfahren gemäß der Erfindung ist gekennzeichnet durch wenigstens folgende Schritte:

- Beschaffen von Informationen über den Verlauf einer voraus liegenden Fahrstrecke ($x_1$, $x_n$) ausgehend von der aktuellen Fahrposition ($x_{act}$) des Fahrzeugs oder der Zugfahrzeug-Anhängerkombination, umfassend Informationen über den Krümmungsverlauf $\{\kappa(x)\}$ der voraus liegenden Fahrstrecke ($x_1$, $x_n$),
- Berechnen von maximalen, ein umkippsicheres Durchfahren der voraus liegenden Fahrstrecke ($x_1$, $x_n$) gewährleistenden Grenzgeschwindigkeiten $\{v_{max}(x)\}$ bezogen auf die jeweilige Fahrposition ($x$) innerhalb der voraus liegenden Fahrstrecke ($x_1$, $x_n$) auf der Basis des Krümmungsverlaufs $\{\kappa(x)\}$ der voraus liegenden Fahrstrecke ($x_1$, $x_n$) und auf der Basis der maximal zulässigen Querbeschleunigung ($a_{y\ max\ ROP}$) nach folgender Berechnungsvorschrift:

$$v_{max}(x) = \sqrt{\frac{a_{y\ max\ ROP}}{\kappa(x)}}$$

- Berechnen von longitudinalen, zur Umkippvermeidung notwendigen Verzögerungen $\{a_{x\ need}(x)\}$ bezogen auf die jeweilige Fahrposition ($x$) innerhalb der voraus liegenden Fahrstrecke ($x_1$, $x_n$) auf der Basis der maximalen Grenzgeschwindigkeiten $\{v_{max}(x)\}$ und auf der Basis der an der aktuellen Fahrposition ($x_{act}$) des Fahrzeugs oder der Zugfahrzeug-Anhängerkombination vorliegenden Fahrzeuggeschwindigkeit ($v_{act}$) nach folgender Berechnungsvorschrift:

$$a_{x\ need}(x) = \frac{v(x)_{max}^2 - v_{act}^2}{2 \cdot x}$$

- Bestimmen einer maximal notwendigen Verzögerung ($a_{x\ max\ needed}$) aus den longitudinalen, zur Umkippvermeidung notwendigen Verzögerungen $\{a_{x\ need}(X)\}$, welche auf die jeweilige Fahrposition ($x$) innerhalb der voraus liegenden Fahrstrecke ($x_1$, $x_n$) bezogen sind:

$$a_{x\,max\,need} = \max(a_{x\,need}(x))$$

- Regelung der Ist-Geschwindigkeit des Fahrzeugs oder der Zugfahrzeug-Anhängerkombination abhängig von der Fahrposition (x) innerhalb der Fahrstrecke ($x_1$, $x_n$) auf der Basis der maximal notwendigen Verzögerung ($a_{x\,max\,needed}$) auf die für die betreffende Fahrposition (x) berechnete maximale Grenzgeschwindigkeit {$v_{max}$ (x)} derart, dass eine Regelung der Ist-Geschwindigkeit nur für die Fahrpositionen (x) innerhalb der Fahrstrecke ($x_1$, $x_n$) erfolgt, bei denen eine longitudinale Verzögerung aber keine longitudinale Beschleunigung erforderlich ist.

Mit anderen Worten wird durch Auswertung von Informationen über den Verlauf der voraus liegenden Fahrstrecke die Fahrzeuggeschwindigkeit an Fahrpositionen, an denen dies erforderlich ist, frühzeitig, d.h. bereits vor einem Erreichen der betreffenden Fahrpositionen reduziert. Redundant hierzu ist weiterhin das Fahrdynamikstabilitätssystem vorhanden, um ein Umkippen des Fahrzeugs zu verhindern, falls der Fahrzeugführer nicht rechtzeitig bremst.

Hierzu wird mit Hilfe einer Analyse geometrischer Kenngrößen des Verlaufs der voraus liegenden Fahrstrecke der Verlauf der Kurvenradien r und/oder der Krümmungen (1/r) der Fahrstrecke ermittelt. Unter Einbeziehung der aktuellen Fahrsituation und der aktuellen Beladung des Fahrzeugs oder der Zugfahrzeug-Anhängerkombination werden Grenzgeschwindigkeiten für die voraus liegende Fahrstrecke ermittelt, die es erlauben, die voraus liegende Fahrstrecke ohne Umkippen des Fahrzeugs oder der Zugfahrzeug-Anhängerkombination zu durchfahren. Wird dann festgestellt, dass die ermittelten Grenzgeschwindigkeiten an bestimmten Fahrpositionen der Fahrstrecke überschritten werden, wird das Fahrzeug sofort auf die dort jeweils ermittelten Grenzgeschwindigkeiten verzögert.

Vorteilhaft dabei ist daher, dass bereits im Voraus eine Umkippgefahr erkannt und frühzeitig eingegriffen wird. Ein Zuziehen einer Kurve, d.h. ein mit fortschreitender Fahrstrecke kleiner werdender Radius wie auch schnelle und übermäßige Lenkungsbetätigungen durch den Fahrzeugführer können durch das erfindungsmäße i Verfahren zur Umkippverhinderung frühzeitig berücksichtigt werden. Eventuell können auch Bremseingriffe vermieden werden, falls eine Motorbremse ausreichend ist. Mithin ergibt sich ein höherer Komfort bei Eingriffen zur Umkippverhinderung. Insgesamt ergibt sich daher eine höhere Sicherheit gegen Umkippen.

In einem weiteren Schritt des erfindungsgemäßen Verfahrens wird eine erforderliche Bremskraft ($F_{brems}$), welche zum Erreichen der maximal notwendigen Verzögerung ($a_{x\,max\,needed}$) notwendig ist, auf der Basis der Masse ($m_{Fzg}$) des Fahrzeugs oder der Zugfahrzeug-Anhängerkombination nach folgender Berechnungsvorschrift berechnet:

$$F_{brems} = m_{Fzg} * a_{x\,max\,need}$$

In einem weiteren Schritt des erfindungsgemäßen Verfahrens wird, falls die erforderliche Bremskraft ($F_{brems}$) durch eine aktive Betätigung einer Bremse des Fahrzeugs oder der Zugfahrzeug-Anhängerkombination durch den Fahrzeugführer und/oder durch auf Gegebenheiten der Fahrstrecke ($x_1$, $x_n$) wie z.B. eine Steigung zurückzuführende Kräfte nicht vollständig aufgebracht werden kann, der in Bezug zur erforderlichen Bremskraft ($F_{brems}$) noch fehlende Anteil an Bremskraft durch Ansteuern im Bremssinne wenigstens einer der folgenden Fahrzeugeinrichtungen ohne Zutun des Fahrzeugführers erzeugt: Eine Dauerbremseinrichtung, eine Antriebsmaschine, eine Betriebsbremseinrichtung, eine Feststellbremseinrichtung.

Durch die in den Unteransprüchen aufgeführten Maßnahmen sind vorteilhafte Weiterbildungen und Verbesserungen der in Anspruch 1 angegebenen Erfindung möglich.

Das Erfassen der aktuellen Fahrsituation des Fahrzeugs oder der Zugfahrzeug-Anhängerkombination umfasst beispielsweise wenigstens Folgendes: Die Ermittlung der aktuellen Geschwindigkeit ($v_{act}$) und/oder der aktuellen Beschleunigung (aact) des Fahrzeugs oder der Zugfahrzeug-Anhängerkombination bezogen auf die aktuelle Fahrposition ($X_{act}$) des Fahrzeugs oder der Zugfahrzeug-Anhängerkombination.

Gemäß einer Weiterbildung beinhaltet das Beschaffen von Informationen über den Verlauf der voraus liegenden Fahrstrecke ($x_1$, $x_n$) ausgehend von der aktuellen Fahrposition ($x_{act}$) des Fahrzeugs oder der Zugfahrzeug-Anhängerkombination weiterhin ein Beschaffen von Informationen über die Steigung, Neigung und/oder den Reibwert der voraus liegenden Fahrstrecke ($x_1$, $x_n$).

Gemäß einer weiteren bevorzugten Maßnahme erfolgt das Beschaffen von Informationen über den Verlauf der voraus liegenden Fahrstrecke ($x_1$, $x_n$) ausgehend von der aktuellen Fahrposition ($x_{act}$) des Fahrzeugs oder der Zugfahrzeug-Anhängerkombination unter Zuhilfenahme von in Bezug auf das Fahrzeug oder auf die Zugfahrzeug-Anhängerkombination bordeigener Einrichtungen und/oder durch Zuhilfenahme von externen Datenquellen. Diese Informationen oder Daten können beispielsweise von folgenden Systemen bereitgestellt werden: Radarsysteme, Kamerasysteme, Lidarsysteme, Ultraschallsysteme, Car-to-Car Kommunikationssysteme, Car-to-Cloudto-Car Kommunikationssysteme, Road-to-Car Kommunikationssysteme, Navigationssysteme (elektronisches Kartenmaterial).

Besonders bevorzugt können auch auf der Basis der longitudinalen Verzögerungen $\{a_{x\,need}\,(x)\}$ bezogen auf die jeweilige Fahrposition (x) innerhalb der voraus liegenden Fahrstrecke $(x_1, x_n)$ Gefahrenpotentiale an zugeordneten Fahrpositionen (x) repräsentierende Kenngrößen erzeugt werden.

Hierbei können insbesondere bei einem Überschreiten einer Grenz-Kenngröße, welche ein bestimmtes Grenz-Gefahrenpotential repräsentiert, durch eine Kenngröße bereits vor dem Erreichen der dieser Kenngröße zugeordneten Fahrposition (x) wenigstens eine der folgenden Maßnahmen durchgeführt werden: Ausgeben eines akustischen und/oder optischen Warnsignals für den Fahrzeugführer, Aktivieren von Kollisionsschutzeinrichtungen, Versteifen der Federung des Fahrzeugs oder der Zugfahrzeug-Anhängerkombination, Erhöhen des Bremsdrucks in Bremszylindern.

Insbesondere können beim Bestimmen der Gegebenheiten der Fahrstrecke $(x_1, x_n)$ wie z.B. Steigungen, Gefälle oder Neigungen aktive Bremseingriffe des Fahrzeugführers mit berücksichtigt werden. Ebenso können beim Bestimmen der notwendigen longitudinalen Verzögerungen $\{a_{x\,need}\,(x)\}$ Gegebenheiten der Fahrstrecke $(x_1, x_n)$ und/oder aktive Bremseingriffe des Fahrzeugführers berücksichtigt werden.

Besonders bevorzugt werden auch Einrichtungen, welche zum Verzögern des Fahrzeugs oder der Zugfahrzeug-Anhängerkombination dienen wie z.B. die Betriebsbremseinrichtung, die Feststellbremseinrichtung, ein Retarder hinsichtlich Ihrer Verfügbarkeit überprüft, um deren Einsatz für die Verzögerung des Fahrzeugs oder der Zugfahrzeug-Anhängerkombination im Rahmen des erfindungsgemäßen Verfahrens bzw. eine Auswahl von einsatzfähigen Einrichtungen sicherzustellen.

Weiterhin können Betätigungen oder Aktivierungen durch den Fahrzeugführer wenigstens folgender Einrichtungen überprüft werden: Retarder, Bremspedal, Fahrerassistenzsysteme, Gaspedal, Differenzialsperre. Dies kann insbesondere zu dem Zweck erfolgen, dass eine bereits dadurch erfolgte Verzögerung des Fahrzeugs oder der Zugfahrzeug-Anhängerkombination durch das Verfahren berücksichtigt wird.

Die Erfindung betrifft auch eine Vorrichtung zur Umkippverhinderung eines Fahrzeugs oder einer Zugfahrzeug-Anhängerkombination in Kurven, beinhaltend wenigstens ein den Antrieb und/oder die Bremsen des Fahrzeugs betätigendes Regelsystem, welches durch selbsttätige, ohne Zutun eines Fahrzeugführers erfolgende Regeleingriffe einer Umkippgefahr des Fahrzeugs entgegen wirkt, gesteuert durch das oben beschriebene Verfahren sowie auch ein Fahrzeug mit einer solchen Vorrichtung.

Weitere die Erfindung verbessernde Maßnahmen werden nachstehend gemeinsam mit der Beschreibung eines Ausführungsbeispiels der Erfindung anhand der Zeichnung näher dargestellt.

Zeichnung

In der ein Ausführungsbeispiel der Erfindung darstellenden Zeichnung zeigt

Fig.1    eine schematische Darstellung des Ablaufs des Verfahrens gemäß der Erfindung gemäß einer bevorzugten Ausführungsform;

Fig.2    eine weitere schematische Darstellung des Ablaufs des Verfahrens von Fig.1.

Beschreibung des Ausführungsbeispiels

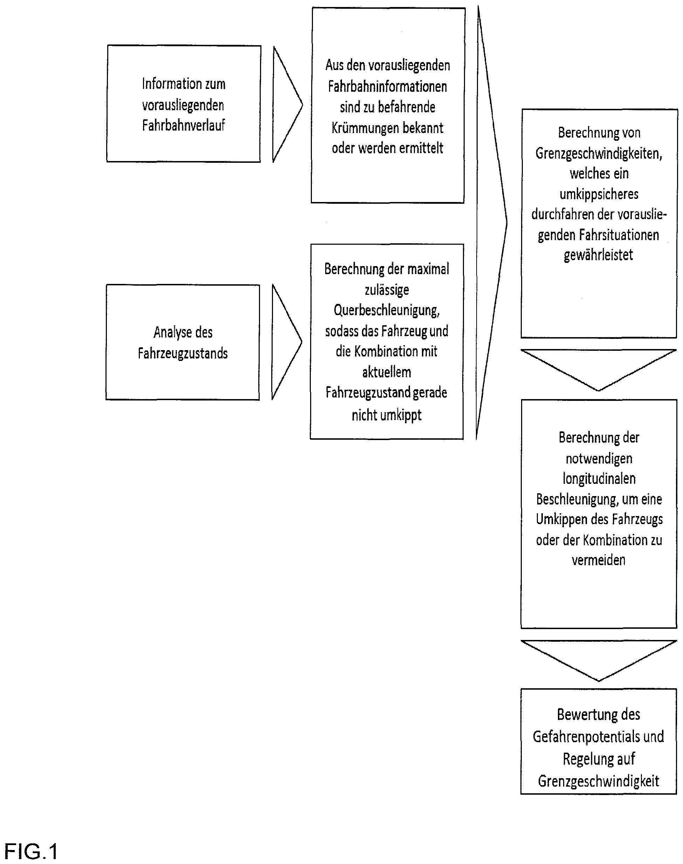

In Fig.1 ist schematisch ein Ablauf eines Verfahrens zur Umkippverhinderung eines Fahrzeugs oder einer Zugfahrzeug-Anhängerkombination in Kurven gezeigt, welches durch selbsttätige, ohne Zutun eines Fahrzeugführers erfolgende Regeleingriffe eines den Antrieb und/oder die Bremsen des Fahrzeugs betätigendes Regelsystem einer Umkippgefahr des Fahrzeugs entgegen wirkt.

Bevorzugt ist das Fahrzeug ein schweres Nutzfahrzeug, insbesondere ein Zugfahrzeug einer Zugfahrzeug-Anhängerkombination mit einer elektro-pneumatischen Bremseinrichtung. Im vorliegenden Fall weist die Zugfahrzeug-Anhängerkombination beispielsweise einen hier nicht gezeigten ein- oder mehrachsigen Sattelauflieger auf, es könnten jedoch auch ein Deichselanhänger oder mehrere Deichselanhänger oder auch ein ein- oder mehrachsiger Zentralachsanhänger am Zugfahrzeug angehängt sein. Die folgenden Ausführungen in Bezug auf das erfindungsgemäße Verfahren gelten sowohl für das Zugfahrzeug im Einzelnen als auch für die gesamte Zugfahrzeug-Anhängerkombination.

Dabei wird eine Betriebsbremseinrichtung des Zugfahrzeugs bzw. der Zugfahrzeug-Anhängerkombination beispielsweise durch eine elektro-pneumatische Reibungsbremseinrichtung in Form eines elektronisch geregelten Bremssystems (EBS; Electronic Brake System) gebildet, bei welchem der Bremsdruck geregelt wird.

Bei einem solchen elektronisch geregelten Bremssystem (EBS) sind achsweise oder radweise Druckregelmodule vorhanden, mit integrierten Einlassventilen, Auslassventilen und Back-up-Ventilen sowie mit Drucksensoren zur Erfassung des Ist-Bremsdrucks und mit einem lokalen elektronischen Steuergerät oder Bremsdruckregler zum Abgleich der Ist-Bremsdrücke mit den Soll-Bremsdrücken gemäß der jeweiligen Bremsanforderung. Der Aufbau und die Funktion solcher Druckregelmodule sind hinlänglich bekannt und sollen deshalb hier nicht weiter erläutert werden.

Das elektronisch geregelte Bremssystem (EBS) des Zugfahrzeugs beinhaltet weiterhin eine Bremsschlupfregelung (ABS), deren ABS-Steuerroutinen bevorzugt in ein zentrales elektronisches EBS-Bremssteuergerät integriert sind. Weiterhin sind hier beim elektronisch geregelten Bremssystem (EBS) vorzugsweise eine Antriebsschlupfregelung (ASR) sowie ein elektronisches Stabilitätsprogramm (ESP) mit einem Rollstabilitätsprogramm (RSP) oder einer Roll Stability Control (RSC) als Teilfunktion vorhanden, welche versucht, das Zugfahrzeug bzw. Zugfahrzeug-Anhängerkombination insbesondere bei Kurvenfahrt vor dem Umkippen zu bewahren, wobei die diesbezüglichen Steuerroutinen ebenfalls in dem zentralen Bremssteuergerät implementiert sind.

Im Rahmen des Rollstabilitätsprogramms (RSP) wird bevorzugt die aktuelle Fahrsituation und die aktuelle Beladung des Zugfahrzeugs oder der Zugfahrzeug-Anhängerkombination bezogen auf eine aktuelle Fahrposition $x_{act}$ des Zugfahrzeugs oder der Zugfahrzeug-Anhängerkombination erfasst. Die aktuelle Fahrsituation beinhaltet beispielsweise die aktuelle Geschwindigkeit $v_{act}$ und/oder die aktuellen Beschleunigung $a_{act}$ des Zugfahrzeugs oder der Zugfahrzeug-Anhängerkombination bezogen auf die aktuelle Fahrposition $x_{act}$. Dieser Schritt wird in Fig. 1 durch den Kasten "Analyse des Fahrzeugzustands" symbolisiert. Die "Analyse des Fahrzeugzustands" beinhaltet weiterhin beispielsweise auch die Verteilung der Ladung/Masse vorne/hinten sowie eine Ermittlung der Lage des Schwerpunkts, insbesondere der Schwerpunkthöhe. Weiterhin kann diese Analyse auch eine Überprüfung der Verfügbarkeit von Einrichtungen und Funktionen beinhalten, welche für eine Verzögerung des Zugfahrzeugs bzw. der Zugfahrzeug-Anhängerkombination sorgen können, wie beispielsweise der Betriebsbremseinrichtung, der Feststellbremseinrichtung und/oder eines Retarders. Weiterhin kann diese Analyse auch eine Überprüfung von Aktivierungen und Betätigungen von Einrichtungen durch den Fahrzeugführer beinhalten wie z.B. Retarderaktivität, Bremspedalstellung, Aktivierung verschiedener Komfortfunktionen (ACC, Tempomat), Gaspedalstellung, Differenzialsperre.

Weiterhin wird bevorzugt im Rahmen des Rollstabilitätsprogramms (RSP) eine maximal zulässige Querbeschleunigung $a_{y\,max\,ROP}$ an der aktuellen Fahrposition $x_{act}$ ermittelt, bei welcher das Fahrzeug oder die Zugfahrzeug-Anhängerkombination gerade noch nicht umkippt, und zwar bezogen auf die aktuelle Fahrsituation und die aktuelle Beladung des Zugfahrzeugs oder der Zugfahrzeug-Anhängerkombination. Dieser Schritt ist in Fig. 1 durch den Kasten "Berechnung der maximal zulässigen Querbeschleunigung" gekennzeichnet.

Parallel hierzu oder zeitlich vorgelagert oder nachgelagert werden Informationen über den Verlauf einer voraus liegenden Fahrstrecke $x_1$ bis $x_n$ ausgehend von einer aktuellen Fahrposition $x_{act}$ des Fahrzeugs oder der Zugfahrzeug-Anhängerkombination erfasst, welche insbesondere Informationen über den Krümmungsverlauf $\kappa(x)$ der voraus liegenden Fahrstrecke $x_1$ bis $x_n$ umfassen. Dieser Schritt ist in Fig. 1 durch den Kasten "Informationen zur voraus liegenden Fahrbahnverlauf" und den sich rechts hieran anschließenden Kasten symbolisiert.

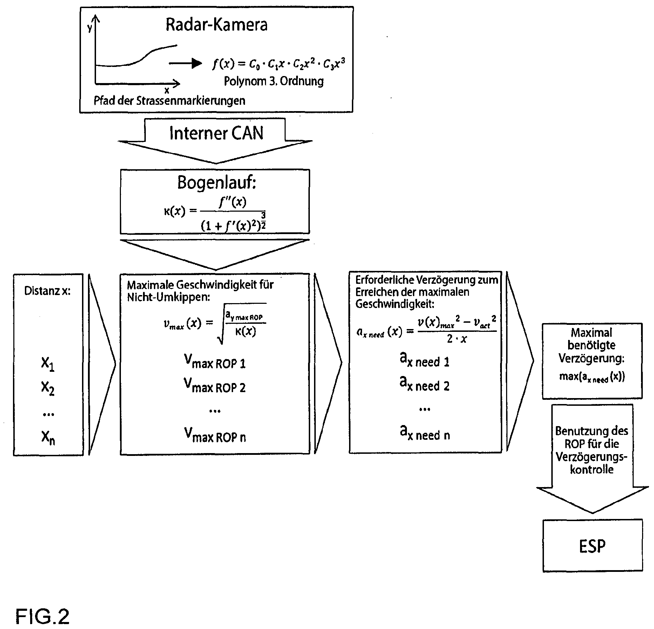

Der voraus liegende Fahrstrecke ("Path of the road markers") wird hier beispielsweise durch n-Stützstellen $x_i$ (i = 1 bis n, "road markers") charakterisiert, wie insbesondere **Fig. 2** zeigt. Der Buchstabe "x" bzw. die Buchstaben "$x_1$, $x_2$, $x_3..x_n$" steht/stehen für die Distanz x einer Fahrposition innerhalb der voraus liegenden Fahrstrecke $x_1$ bis $x_n$ von der aktuellen Fahrposition $x_{act}$, wie in dem Kasten "Distance x" in Fig. 2 veranschaulicht.

Dabei wird angenommen, dass sich die voraus liegende Fahrstrecke $x_1$ bis $x_n$ in einer Ebene befindet. Zusätzlich kann aber auch eine Erfassung des vertikalen Verlaufs der voraus liegenden Fahrstrecke erfolgen. Die aktuelle Fahrposition $x_{act}$ des Zugfahrzeugs befindet sich zum Zeitpunkt t=0 in diesem Diagramm beispielsweise an dessen Anfang, so dass das Zugfahrzeug ausgehend von der aktuellen Fahrposition $x_{act}$ mit steigender Zeit t die Stützstellen $x_1$ bis $x_n$ bzw. die Abstände $x_1$ bis $x_n$ von der aktuellen Fahrposition $x_{act}$ einnimmt. Dabei markiert der letzte Abstand $x_n$ die letzte Stützstelle, deren Daten bekannt sind oder gewonnen werden können.

Das Zugfahrzeug weist beispielsweise eine bordeigene Radarkamera mit eigener Auswerteeinrichtung auf, mit welcher die voraus liegende Fahrstrecke $x_1$ bis $x_n$ erfasst wird. Die Auswertung erfolgt dabei bevorzugt mit Hilfe eines Polynoms dritter Ordnung:

$$f(x) = C_0 + C_1 \cdot x + C_2 x^2 + C_3 x^3$$

Anhand der gewonnenen Daten über die voraus liegende Fahrstrecke $x_1$ bis $x_n$ wird dann deren Krümmungsverlauf "Curvature" oder $\kappa(x)$ bezogen auf den Abstand von der aktuellen Fahrposition $x_{act}$ bzw. bezogen die Fahrposition $x_i$ ermittelt. Folglich wird in diesem Schritt für jede Distanz $x_1$ bis $x_n$ von der aktuellen Fahrposition $x_{act}$ die zugeordnete Krümmung $\kappa(x_1)$, $\kappa(x_2)$ ...... $\kappa(x_n)$ nach folgender Berechnungsvorschrift berechnet:

$$\kappa(x) = \frac{f''(x)}{(1 + f'(x)^2)^{\frac{3}{2}}}$$

Die Informationen über den Verlauf einer voraus liegenden Fahrstrecke $x_1$ bis $x_n$ beinhalten daher den Krümmungsverlauf $\kappa(x)$ der Fahrbahn. Des Weiteren tragen folgende Größen zur Verbesserung und Präzisierung des Verlauf der voraus liegenden Fahrstrecke $x_1$ bis $x_n$: Die Steigung, die (seitliche) Neigung und der Reibwert der Fahrstrecke bzw. Fahrbahn.

Die Informationen über den Verlauf einer voraus liegenden Fahrstrecke $x_1$ bis $x_n$ können wie hier bevorzugt durch die Radarkamera direkt an Bord des Zugfahrzeugs bereitgestellt und/oder aus von externen Einrichtungen übermittelten Daten gewonnen werden. Diese Daten können beispielsweise von folgenden Systemen bereitgestellt bzw. übermittelt werden: Radarsysteme, Kamerasysteme, Lidarsysteme, Ultraschallsysteme, Car-to-Car Kommunikationssysteme, Car-to-Cloud-to-Car-Kommunikationssysteme, Road-to-Car-Kommunikationssysteme, Navigationssysteme (elektronisches Kartenmaterial).

Es folgt der Schritt des Berechnens von maximalen, ein umkippsicheres Durchfahren der voraus liegenden Fahrstrecke $x_1$, $x_n$ gewährleistenden Grenzgeschwindigkeiten $v_{max}(x)$ bezogen auf die jeweilige Fahrposition x innerhalb der voraus liegenden Fahrstrecke $x_1$, $x_n$ auf der Basis des Krümmungsverlaufs $\kappa(x)$ der voraus liegenden Fahrstrecke $x_1$, $x_n$ und auf der Basis der maximal zulässigen Querbeschleunigung $a_{y\,max\,ROP}$ nach folgender Berechnungsvorschrift:

$$v_{max}(x) = \sqrt{\frac{a_{y\,max\,ROP}}{\kappa(x)}}$$

Dieser Schritt ist in Fig.1 durch den Kasten "Berechnung von Grenzgeschwindigkeiten" und in Fig.2 durch den Kasten "Maximal speed limit to not roll over" symbolisiert. Folglich werden in diesem Schritt für jede Distanz bis $x_n$ die zugeordnete Grenzgeschwindigkeit $v_{max}(x_1)$, $v_{max}(x_2)$ ...... $v_{max}(x_n)$ berechnet.

Folglich werden Grenzgeschwindigkeiten $v_{max}(x_1)$, $v_{max}(x_2)$...... $v_{max}(x_n)$ berechnet, welche ein umkippsicheres Durchfahren der voraus liegenden Fahrstrecke $x_1$, $x_n$ gewährleisten. Aus den zuvor übermittelten oder bereit gestellten Informationen über die voraus liegende Fahrstrecke $x_1$, $x_n$ sind die zu befahrenden Krümmungen $\kappa(x)$ bekannt oder wurden ermittelt. Durch Analyse der aktuellen Fahrsituation und der aktuellen Beladung des Zugfahrzeugs oder der Zugfahrzeug-Anhängerkombination wurde die maximal zulässige Querbeschleunigung $a_{y\,max\,ROP}$ bestimmt. Die zulässige Querbeschleunigung $a_{y\,max\,ROP}$ beschreibt die Querbeschleunigung, unter welcher das Zugfahrzeug oder die Zugfahrzeug-Anhängerkombination unter der aktuellen Fahrsituation (Geschwindigkeit, Längsbeschleunigung) und der aktuellen Beladung gerade nicht umkippt. Vorzugsweise wird die ermittelte zugelassene Querbeschleunigung $a_{y\,max\,ROP}$ in Relation zu Fahrbahninformationen (z.B. Steigung, seitliche Neigung) sowie zu aktuellen Aktivitäten des Fahrzeugführers gesetzt. Aus den zu befahrenden Krümmungen $\kappa(x)$ und der ermittelten zulässigen Querbeschleunigung $a_{y\,max\,ROP}$ wird dann die maximale Grenzgeschwindigkeit $v_{max}(x)$ berechnet.

Im nächsten Schritt, der in Fig.1 durch den Kasten "Berechnung der notwendigen longitudinalen Beschleunigung" und in Fig.2 durch den Kasten "Needed deceleration to reach max speed limit" symbolisiert ist, werden longitudinale, zur Umkippvermeidung notwendige Verzögerungen $a_{x\,need}(x)$ bezogen auf die jeweilige Fahrposition oder Distanz x innerhalb der voraus liegenden Fahrstrecke $x_1$, $x_n$ auf der Basis der maximalen Grenzgeschwindigkeiten $v_{max}(x)$ und auf der Basis der an der aktuellen Fahrposition $x_{act}$ des Fahrzeugs oder der Zugfahrzeug-Anhängerkombination vorliegenden Fahrzeuggeschwindigkeit $v_{act}$ nach folgender Berechnungsvorschrift berechnet:

$$a_{x\,need}(x) = \frac{v(x)_{max}^2 - v_{act}^2}{2 \cdot x}$$

Bei den longitudinalen, zur Umkippvermeidung notwendigen Verzögerungen $a_{x\,need}(x)$ handelt es sich folglich um Längsverzögerungen. Folglich wird in diesem Schritt für jede Distanz bis $x_n$ von der aktuellen Fahrposition $x_{act}$ die zugeordnete longitudinale, zur Umkippvermeidung notwendige Verzögerungen $a_{x\,need}(x_1)$ .... $a_{x\,need}(x_n)$ berechnet.

Im nächsten, in den Figuren nicht gezeigten Schritt wird eine maximal notwendige Verzögerung $a_{x\,max\,needed}$ aus den longitudinalen, zur Umkippvermeidung notwendigen Verzögerungen $a_{x\,need}(x)$ bestimmt, welche auf die jeweilige Fahrposition oder Distanz x innerhalb der voraus liegenden Fahrstrecke $(x_1, x_n)$ bezogen sind:

$$a_{x\,max\,need} = \max(a_{x\,need}(x))$$

Im nächsten Schritt erfolgt die Regelung der Ist-Geschwindigkeit des Fahrzeugs oder der Zugfahrzeug-Anhängerkombination abhängig von der Fahrposition bzw. Distanz x innerhalb der Fahrstrecke $x_1$, $x_n$ auf der Basis der maximal notwendigen Verzögerung $a_{x\,max\,needed}$ auf die für die betreffende Fahrposition bzw. Distanz x berechnete maximale Grenzgeschwindigkeit $v_{max}(x)$ derart, dass eine Regelung der Ist-Geschwindigkeit nur für die Fahrpositionen bzw. Distanzen x innerhalb der Fahrstrecke $x_1$, $x_n$ erfolgt, bei denen eine longitudinale Verzögerung aber keine longitudinale Beschleunigung erforderlich ist. Hintergrund dieser Vorgehensweise ist, dass ohne Zutun des Fahrzeugführers keine positive Beschleunigung auf das Zugfahrzeug bzw. die Zugfahrzeug-Anhängerkombination ausgeübt werden soll, sondern erforderlichenfalls lediglich eine Verzögerung (negative Beschleunigung). Handelt es sich bei der ermittelten longitudinalen Beschleunigung nicht um eine Verzögerung wird diese daher nicht weiter berücksichtigt.

Weiterhin werden bevorzugt auf der Basis der longitudinalen Verzögerungen $a_{x\,need}(x)$ bezogen auf die jeweilige Fahrposition bzw. Distanz x innerhalb der voraus liegenden Fahrstrecke $x_1$, $x_n$ Gefahrenpotentiale an zugeordneten Fahrpositionen x repräsentierende Kenngrößen erzeugt.

Hierbei können insbesondere bei einem Überschreiten einer Grenz-Kenngröße, welche ein bestimmtes Grenz-Gefahrenpotential repräsentiert, durch eine Kenngröße bereits vor dem Erreichen der dieser Kenngröße zugeordneten Fahrposition x wenigstens eine der folgenden Maßnahmen durchgeführt werden: Ausgeben eines akustischen und/oder optischen Warnsignals für den Fahrzeugführer, Aktivieren von Kollisionsschutzeinrichtungen, Versteifen der Federung des Fahrzeugs oder der Zugfahrzeug-Anhängerkombination, Erhöhen des Bremsdrucks in Bremszylindern.

Dieser Schritt ist in Fig.1 durch den Block "Bewertung des Gefahrenpotentials und Regelung auf Grenzgeschwindigkeit" symbolisiert.

Um die maximal notwendige errechnete Verzögerung auf dem Zugfahrzeug bzw. der Zugfahrzeug-Anhängerkombination umzusetzen, wird mit Hilfe der bekannten Fahrzeugmasse die notwendige Bremskraft $F_{brems}$ für das Zugfahrzeug bzw. für die Zugfahrzeug-Anhängerkombination errechnet:

$$F_{brems} = m_{Fzg} * a_{x\,max\,need}$$

Die notwendige Bremskraft $F_{brems}$ wird bevorzugt in Relation zu Informationen über die Fahrbahn (z.B. Steigung, seitliche Neigung) sowie aktuelle Aktivitäten des Fahrzeugführers gesetzt.

Falls die notwendige Bremskraft $F_{brems}$ nicht durch äußere Gegebenheiten (z.B. Steigung der Fahrbahn) oder durch eine Reaktion des Fahrers (z.B. Betätigung des Bremspedals) aufgebracht werden, wird die notwendige Bremskraft $F_{brems}$ im Rahmen des Verfahrens beispielsweise durch Ansteuern bzw. Aktivieren folgender Fahrzeugeinrichtungen realisiert:

- Dauerbremsanlage (Retarder)

- Motorbremse (Motormoment)

- Bremseingriffe (insgesamt und radindividuell) durch Betriebsbremse und/oder Feststellbremse

Die Ergebnisse aus der Berechnung der notwendigen longitudinalen Beschleunigung werden genutzt um zum aktuellen Zeitpunkt des Fahrzeugs das Gefahrenpotenzial zu bewerten. Durch Applikationsparameter kann eingestellt werden bei welcher notwendigen longitudinalen Beschleunigung das System eingreifen soll. So kann beispielsweise lediglich durch ein frühes Reduzieren des Motormoments die Grenzgeschwindigkeit komfortabel eingeregelt werden oder auch sehr spät durch einen harten Bremseingriff. Dies gibt dem Fahrzeugführer die Möglichkeit, selbst zu reagieren. Denkbar ist jede Stufe zwischen den beiden vorgenannten Extremen.

Ist von einem akuten Gefahrenpotenzial auszugehen können folgende Maßnahmen eingeleitet werden:

- Vorbereitung des Bremssystems und anderer Systeme und Funktionen auf eine Bremsung (Befüllen der Bremszylinder, Straffen des Fahrwerks, Aktivieren von Kollisionsvorbereitungssysteme, Aktivierung von Fahrdynamikstabilisierungsfunktionen)

- Akustische/Optische Rückmeldung an den Fahrer

**Patentansprüche**

1. Verfahren zur Umkippverhinderung eines Fahrzeugs oder einer Zugfahrzeug-Anhängerkombination in Kurven, welches durch selbsttätige, ohne Zutun eines Fahrzeugführers erfolgende Regeleingriffe eines den Antrieb und/oder die Bremsen des Fahrzeugs betätigendes Regelsystem einer Umkippgefahr des Fahrzeugs entgegen wirkt, und welches wenigstens die folgenden Schritte umfasst:

a) Erfassen der aktuellen Fahrsituation und der aktuellen Beladung des Fahrzeugs oder der Zugfahrzeug-Anhängerkombination bezogen auf die aktuelle Fahrposition ($x_{act}$) des Fahrzeugs oder der Zugfahrzeug-Anhängerkombination,

b) Ermitteln einer maximal zulässigen Querbeschleunigung ($a_{y \, max \, ROP}$) an der aktuellen Fahrposition (xact), bei welcher das Fahrzeug oder die Zugfahrzeug-Anhängerkombination gerade noch nicht umkippt, bezogen auf die aktuelle Fahrsituation und die aktuelle Beladung des Fahrzeugs oder der Zugfahrzeug-Anhängerkombination,

c) Beschaffen von Informationen über den Verlauf einer voraus liegenden Fahrstrecke ($x_1$, $x_n$) ausgehend von der aktuellen Fahrposition ($x_{act}$) des Fahrzeugs oder der Zugfahrzeug-Anhängerkombination, umfassend Informationen über den Krümmungsverlauf $\{\kappa(x)\}$ der voraus liegenden Fahrstrecke ($x_1$, $x_n$),

d) Berechnen von maximalen, ein umkippsicheres Durchfahren der voraus liegenden Fahrstrecke ($x_1$, $x_n$) gewährleistenden Grenzgeschwindigkeiten $\{v_{max}(x)\}$ bezogen auf die jeweilige Fahrposition (X) innerhalb der voraus liegenden Fahrstrecke ($x_1$, $x_n$) auf der Basis des Krümmungsverlaufs $\{\kappa(x)\}$ der voraus liegenden Fahrstrecke ($x_1$, $x_n$) und auf der Basis der maximal zulässigen Querbeschleunigung ($a_{y \, maX \, ROP}$) nach folgender Berechnungsvorschrift:

$$v_{max}(x) = \sqrt{\frac{a_{y \, max \, ROP}}{\kappa(x)}}$$

e) Berechnen von longitudinalen, zur Umkippvermeidung notwendigen Verzögerungen $\{a_{x \, need}(x)\}$ bezogen auf die jeweilige Fahrposition (x) innerhalb der voraus liegenden Fahrstrecke ($x_1$, $x_n$) auf der Basis der maximalen Grenzgeschwindigkeiten $\{v_{maX}(x)\}$ und auf der Basis der an der aktuellen Fahrposition ($x_{act}$) des Fahrzeugs oder der Zugfahrzeug-Anhängerkombination vorliegenden Fahrzeuggeschwindigkeit (vact),

f) Bestimmen einer maximal notwendigen Verzögerung ($a_{x \, max \, needed}$) aus den longitudinalen, zur Umkippvermeidung notwendigen Verzögerungen $\{a_{x \, need}(x)\}$, welche auf die jeweilige Fahrposition (x) innerhalb der voraus liegenden Fahrstrecke ($x_1$, $x_n$) bezogen sind:

$$a_{x \, max \, need} = \max(a_{x \, need}(x))$$

g) Regelung der Ist-Geschwindigkeit des Fahrzeugs oder der Zugfahrzeug-Anhängerkombination abhängig von der Fahrposition (x) innerhalb der Fahrstrecke ($x_1$, $x_n$) auf der Basis der maximal notwendigen Verzögerung ($a_{x \, max \, needed}$) auf die für die betreffende Fahrposition (x) berechnete maximale Grenzgeschwindigkeit $\{v_{maX}(x)\}$ derart, dass eine Regelung der Ist-Geschwindigkeit für die Fahrpositionen (x) innerhalb der Fahrstrecke ($x_1$, $x_n$) erfolgt, bei denen eine longitudinale Verzögerung erforderlich ist, **dadurch gekennzeichnet, dass**

h) das Berechnen der longitudinalen, zur Umkippvermeidung notwendigen Verzögerungen $\{a_{x \, need}(x)\}$ bezogen auf die jeweilige Fahrposition (x) innerhalb der voraus liegenden Fahrstrecke ($x_1$, $x_n$) auf der Basis der maximalen Grenzgeschwindigkeiten $\{v_{max}(x)\}$ und auf der Basis der an der aktuellen Fahrposition ($x_{act}$) des Fahrzeugs oder der Zugfahrzeug-Anhängerkombination vorliegenden Fahrzeuggeschwindigkeit ($v_{act}$) nach folgender Berechnungsvorschrift erfolgt:

$$a_{x \, need}(x) = \frac{v(x)_{max}^2 - v_{act}^2}{2 \cdot x}$$

i) und dass eine Regelung der Ist-Geschwindigkeit nur für die Fahrpositionen (x) innerhalb der Fahrstrecke ($x_1$, $x_n$) erfolgt, bei denen eine longitudinale Verzögerung aber keine longitudinale Beschleunigung erforderlich ist, und dass

j) eine erforderliche Bremskraft ($F_{brems}$), welche zum Erreichen der maximal notwendigen Verzögerung ($a_{x\ max\ needed}$) notwendig ist, auf der Basis der Masse ($m_{Fzg}$) des Fahrzeugs oder der Zugfahrzeug-Anhängerkombination nach folgender Berechnungsvorschrift berechnet wird:

$$F_{brems} = m_{Fzg} * a_{x\ max\ need}$$

k) und dass falls die erforderliche Bremskraft ($F_{brems}$) durch eine aktive Betätigung einer Bremse des Fahrzeugs oder der Zugfahrzeug-Anhängerkombination durch den Fahrzeugführer und/oder durch auf Gegebenheiten der Fahrstrecke ($x_1$, $x_n$) zurückzuführende Kräfte nicht vollständig aufgebracht werden kann, der in Bezug zur erforderlichen Bremskraft ($F_{brems}$) noch fehlende Anteil an Bremskraft durch Ansteuern im Bremssinne wenigstens einer der folgenden Fahrzeugeinrichtungen ohne Zutun des Fahrzeugführers erzeugt wird: Eine Dauerbremseinrichtung, eine Antriebsmaschine, eine Betriebsbremseinrichtung, eine Feststellbremseinrichtung.

2. Verfahren nach Anspruch 1, **dadurch gekennzeichnet, dass** das Erfassen der aktuellen Fahrsituation des Fahrzeugs oder der Zugfahrzeug-Anhängerkombination wenigstens Folgendes umfasst: Die Ermittlung der aktuellen Geschwindigkeit ($v_{act}$) und/oder der aktuellen Beschleunigung (aact) des Fahrzeugs oder der Zugfahrzeug-Anhängerkombination bezogen auf die aktuelle Fahrposition ($x_{act}$) des Fahrzeugs oder der Zugfahrzeug-Anhängerkombination.

3. Verfahren nach einem der vorhergehenden Ansprüche, **dadurch gekennzeichnet, dass** das Beschaffen von Informationen über den Verlauf der voraus liegenden Fahrstrecke ($x_1$, $x_n$) ausgehend von der aktuellen Fahrposition ($x_{act}$) des Fahrzeugs oder der Zugfahrzeug-Anhängerkombination weiterhin ein Beschaffen von Informationen über die Steigung, Neigung und/oder den Reibwert der voraus liegenden Fahrstrecke ($x_1$, $x_n$) beinhaltet.

4. Verfahren nach einem der vorhergehenden Ansprüche, **dadurch gekennzeichnet, dass** das Beschaffen von Informationen über den Verlauf der voraus liegenden Fahrstrecke ($x_1$, $x_n$) ausgehend von der aktuellen Fahrposition ($x_{act}$) des Fahrzeugs oder der Zugfahrzeug-Anhängerkombination unter Zuhilfenahme von in Bezug auf das Fahrzeug oder auf die Zugfahrzeug-Anhängerkombination bordeigener Einrichtungen und/oder durch Zuhilfenahme von externen Datenquellen erfolgt.

5. Verfahren nach einem der vorhergehenden Ansprüche, **dadurch gekennzeichnet, dass** auf der Basis der longitudinalen Verzögerungen {$a_{x\ need}$ (x)} bezogen auf die jeweilige Fahrposition (x) innerhalb der voraus liegenden Fahrstrecke ($x_1$, $x_n$) Gefahrenpotentiale an zugeordneten Fahrpositionen (x) repräsentierende Kenngrößen erzeugt werden.

6. Verfahren nach Anspruch 5, **dadurch gekennzeichnet, dass** bei einem Überschreiten einer Grenz-Kenngröße, welche ein bestimmtes Grenz-Gefahrenpotential repräsentiert, durch eine Kenngröße bereits vor dem Erreichen der dieser Kenngröße zugeordneten Fahrposition (x) wenigstens eine der folgenden Maßnahmen durchgeführt wird: Ausgeben eines akustischen und/oder optischen Warnsignals für den Fahrzeugführer, Aktivieren von Kollisionsschutzeinrichtungien, Versteifen der Federung des Fahrzeugs oder der Zugfahrzeug-Anhängerkombination, Erhöhen des Bremsdrucks in Bremszylindern.

7. Verfahren nach einem der vorhergehenden Ansprüche, **dadurch gekennzeichnet, dass** beim Bestimmen der Gegebenheiten der Fahrstrecke ($x_1$, $x_n$) aktive Bremseingriffe des Fahrzeugführers berücksichtigt werden.

8. Verfahren nach einem der vorhergehenden Ansprüche, **dadurch gekennzeichnet, dass** beim Bestimmen der notwendigen longitudinalen Verzögerungen {$a_{x\ need}$ (x)} Gegebenheiten der Fahrstrecke ($x_1$, $x_n$) und/oder aktive Bremseingriffe des Fahrzeugführers berücksichtigt werden.

9. Verfahren nach einem der vorhergehenden Ansprüche, **dadurch gekennzeichnet, dass** Einrichtungen, welche zum Verzögern des Fahrzeugs oder der Zugfahrzeug-Anhängerkombination dienen, hinsichtlich Ihrer Verfügbarkeit überprüft werden.

10. Verfahren nach einem der vorhergehenden Ansprüche, **dadurch gekennzeichnet, dass**

Betätigungen oder Aktivierungen durch den Fahrzeugführer wenigstens folgender Einrichtungen überprüft werden: Retarder, Bremspedal, Fahrerassistenzsysteme, Gaspedal, Differenzialsperre.

11. Vorrichtung zur Umkippverhinderung eines Fahrzeugs oder einer Zugfahrzeug-Anhängerkombination in Kurven, beinhaltend wenigstens ein den Antrieb und/oder die Bremsen des Fahrzeugs betätigendes Regelsystem, welches durch selbsttätige, ohne Zutun eines Fahrzeugführers erfolgende Regeleingriffe einer Umkippgefahr des Fahrzeugs entgegen wirkt, gesteuert durch ein Verfahren nach einem der vorhergehenden Ansprüche.

12. Fahrzeug mit einer Vorrichtung nach Anspruch 11.

**Claims**

1. A method for preventing the rollover of a vehicle or a tractor-trailer combination on curves that counteracts the risk of vehicle rollover by means of independent control interventions carried out without the assistance of the vehicle driver by a closed-loop system that actuates the drive unit and/or the brakes of the vehicle, this method comprising at least the following steps:

   a) recording the current driving situation and the current load of the vehicle or the tractor-trailer combination in relation to the current driving position ($x_{act}$) of the vehicle or the tractor-trailer combination,
   b) ascertaining a maximum admissible transverse acceleration ($a_{y\ max\ ROP}$) at the current driving position ($x_{act}$) at which the vehicle or the tractor-trailer combination is on the verge of rolling over in relation to the current driving situation and the current load of the vehicle or the tractor-trailer combination,
   c) obtaining information about the course of a route ahead ($x_1$, $x_n$) starting from the current driving position ($x_{act}$) of the vehicle or the tractor-trailer combination and comprising information about the curvature profile $\{\kappa(x)\}$ of the route ahead ($x_1$, $x_n$),
   d) calculating maximum limit speeds $\{v_{max}(x)\}$ that ensure a rollover-safe passage along the route ahead ($x_1$, $x_n$) in relation to the driving position (X) along the route ahead ($x_1$, $x_n$) on the basis of the curvature profile $\{\kappa(x)\}$ of the route ahead ($x_1$, $x_n$) and on the basis of the maximum permissible transverse acceleration ($a_{y\ max\ ROP}$) according to the following calculation rule:

$$v_{max}(x) = \sqrt{\frac{a_{y\ max\ ROP}}{\kappa(x)}}$$

   e) calculating the longitudinal decelerations needed $\{a_{x\ need}(x)\}$ to prevent rollover in relation to the driving position (x) along the route ahead ($x_1$, $x_n$) on the basis of the maximum limit speeds $\{v_{max}(x)\}$ and on the basis of the vehicle speed ($v_{act}$) at the current driving position ($x_{act}$) of the vehicle or the tractor-trailer combination;
   f) determining the maximum deceleration needed ($a_{x\ max\ needed}$) from the longitudinal decelerations needed $\{a_{x\ need}(x)\}$ to prevent rollover, which are related to the driving position (x) along the route ahead ($x_1$, $x_n$):

$$a_{x\ max\ need} = \max(a_{x\ need}(x))$$

   g) setting the actual speed of the vehicle or the tractor-trailer combination as a function of the driving position (x) along the route ($x_1$, $x_n$) on the basis of the maximum deceleration needed ($a_{x\ max\ needed}$) to the maximum limit speed $\{v_{max}(x)\}$ calculated for the relevant driving position (x) in such a way as to set the actual speed for those driving positions (x) along the route ($x_1$, $x_n$) at which longitudinal deceleration is needed, **characterised in that**
   h) the longitudinal decelerations needed to prevent rollover $\{a_{x\ need}(x)\}$ are calculated in relation to the driving position (x) along the route ahead ($x_1$, $x_n$) on the basis of the maximum limit speeds $\{v_{max}(x)\}$ and on the basis of the vehicle speed ($v_{act}$) at the current driving position ($x_{act}$) of the vehicle or the tractor-trailer combination according to the following calculation rule:

$$a_{x\,need}(x) = \frac{v(x)_{max}^2 - v_{act}^2}{2 \cdot x}$$

i) and that the actual speed is set only for those driving positions (x) along the route ($x_1$, $x_n$) at which longitudinal deceleration but not longitudinal acceleration is needed, and that

j) the brake force ($F_{brems}$) needed to achieve the maximum deceleration needed {$a_{x\,max\,needed}$} is calculated on the basis of the mass ($m_{Fzg}$) of the vehicle or the tractor-trailer combination according to the following calculation rule:

$$F_{brems} = m_{Fzg} * a_{x\,max\,need}$$

k) and that if the entirety of the brake force ($F_{brems}$) needed cannot be applied by the active actuation of a brake of the vehicle or the tractor-trailer combination by the vehicle driver and/or by forces create by the conditions on the route ($x_1$, $x_n$), that portion of the brake force required to make up the brake force ($F_{brems}$) needed is produced by actuating, that is by braking, at least one of the following vehicle devices without the assistance of the vehicle driver: an auxiliary brake retarder, a drive unit, a service brake device or an emergency brake device.

2. A method according to claim 1, **characterised in that** recording the current driving situation of the vehicle or the tractor-trailer combination involves at least the following: ascertaining the current speed ($v_{act}$) and/or the current acceleration ($a_{act}$) of the vehicle or the tractor-trailer combination in relation to the current driving position ($x_{act}$) of the vehicle or the tractor-trailer combination.

3. A method according to any one of the preceding claims, **characterised in that** obtaining information about the course of the route ahead ($x_1$, $x_n$) starting from the current driving position ($x_{act}$) of the vehicle or the tractor-trailer combination also involves obtaining information about the incline, gradient and/or coefficient of friction of the route ahead ($x_1$, $x_n$).

4. A method according to any one of the preceding claims, **characterised in that** information about the course of the route ahead ($x_1$, $x_n$) starting from the current driving position ($x_{act}$) of the vehicle or the tractor-trailer combination is obtained with the aid of onboard devices on the vehicle or the tractor-trailer combination and/or with the aid of external data sources.

5. A method according to any one of the preceding claims, **characterised in that** characteristics representing potential risks at assigned driving positions (x) are produced on the basis of the longitudinal decelerations {$a_{x\,need}(x)$} in relation to the driving position (x) along the route ahead ($x_1$, $x_n$).

6. A method according to claim 5, **characterised in that,** if a characteristic exceeds a limit characteristic representing a certain limit risk potential before this characteristic reaches its assigned the driving position (x), at least one of the following actions is performed: the emission of an acoustic and/or optical warning signal for the vehicle driver, the activation of collision-protection devices, the stiffening of the suspension of the vehicle or the tractor-trailer combination and the increasing of the brake pressure in the brake cylinders.

7. A method according to any one of the preceding claims, **characterised in that** active braking interventions by the vehicle driver are taken into account when determining the conditions on the route ($x_1$, $x_n$).

8. A method according to any one of the preceding claims, **characterised in that** conditions on the route ($x_1$, $x_n$) and/or active braking interventions by the vehicle driver are taken into account when determining the longitudinal decelerations {$a_{x\,need}(x)$}.

9. A method according to any one of the preceding claims, **characterised in that** devices that serve to decelerate the vehicle or the tractor-trailer combination are tested with regard to availability.

10. A method according to any one of the preceding claims, **characterised in that** actuations or activations by the vehicle driver of at least the following devices are tested: retarder, brake pedal, driver assistance systems, accelerator pedal, differential lock.

**11.** A device for preventing the rollover of a vehicle or a tractor-trailer combination on curves comprising at least one closed-loop control system that actuates the drive and/or the brakes of the vehicle and counteracts the risk of vehicle rollover by means of independent control interventions carried out without the assistance of the vehicle driver, this device being controlled by a method according to any one of the preceding claims.

**12.** A vehicle having a device according to claim 13.

**Revendications**

**1.** Procédé pour empêcher le basculement d'un véhicule ou d'une combinaison d'un véhicule tracteur et d'une remorque dans des tournants, qui s'oppose, par des interventions automatiques de réglage, s'effectuant sans la participation d'un conducteur du véhicule, d'un système de réglage actionnant l'entraînement et/ou les freins du véhicule, à un danger de basculement du véhicule et qui comprend au moins les stades suivants :

a) on détecte la situation de circulation en cours et la charge en cours du véhicule ou de la combinaison du véhicule tracteur et de la remorque, rapportées à la position ($x_{act}$) de circulation en cours du véhicule ou de la combinaison du véhicule tracteur et de la remorque,

b) on détermine une accélération ($a_{y\,max\,ROP}$) transversale admissible au maximum à la position ($x_{act}$) de circulation en cours, pour laquelle le véhicule ou la combinaison du véhicule tracteur et de la remorque ne bascule précisément pas encore, rapportée à la situation de circulation en cours et à la charge en cours du véhicule ou de la combinaison du véhicule tracteur et de la remorque,

c) on se procure des informations sur le tracé d'une section ($x_1$, $x_n$) de circulation se trouvant en avant à partir de la position ($x_{act}$) de circulation en cours du véhicule ou de la combinaison du véhicule tracteur et de la remorque, comprenant des informations sur le tracé $\{\kappa(x)\}$ de virage de la section ($x_1$, $x_n$) de circulation se trouvant en avant,

d) on calcule des vitesses $\{v_{max}(x)\}$ limites maximum assurant une circulation sécurisée au basculement, sur la section ($x_1$, $x_n$) de circulation se trouvant en avant, rapportées à la position (X) respective de circulation dans la section ($x_1$, $x_n$) de circulation se trouvant en avant, sur la base du tracé $\{\kappa(x)\}$ de virage de la section ($x_1$, $x_n$) de circulation se trouvant en avant et sur la base de l'accélération ($a_{y\,max\,ROP}$) transversale admissible au maximum suivant la prescription de calcul suivante :

$$v_{max}(x) = \sqrt{\frac{a_{y\,max\,ROP}}{k(x)}}$$

e) on calcule des décélérations $\{a_{x\,need}(x)\}$ longitudinales nécessaires pour empêcher un basculement rapporté à la position (x) respective de circulation dans la section ($x_1$, $x_n$) de circulation se trouvant en avant, sur la base des vitesses $\{v_{max}(x)\}$ limites maximum et sur la base de la vitesse ($v_{act}$) du véhicule à la position ($x_{act}$) de circulation en cours du véhicule ou de la combinaison du véhicule tracteur et de la remorque,

f) on détermine une décélération ($a_{x\,max\,needed}$) nécessaire au maximum à partir des décélérations $\{a_x\,need\,(x)\}$ longitudinales nécessaires pour empêcher un basculement, qui sont rapportées à la position (x) respective de circulation dans la section ($x_1$, $x_n$) de circulation se trouvant en avant :

$$a_{x\,max\,need} = \max(a_{x\,need}(x))$$

g) on règle la vitesse réelle du véhicule ou de la combinaison du véhicule tracteur et de la remorque en fonction de la position (x) de circulation dans la section ($x_1$, $x_n$) de circulation, sur la base de la décélération ($a_{x\,max\,needed}$) nécessaire au maximum jusqu'à la vitesse $\{v_{max}(x)\}$ limite maximum calculée pour la position (x) de circulation concernée, de manière à effectuer un réglage de la vitesse réelle pour les positions (x) de circulation dans la section (x1, xn) de circulation, pour lesquelles une décélération longitudinale est nécessaire, **caractérisé en ce que**

h) on effectue le calcul des décélérations $\{a_x\,need\,(x)\}$ longitudinales nécessaires pour empêcher un basculement, rapportées à la position (x) de circulation respective dans la section (x1, xn) de circulation se trouvant en avant, sur la base des vitesses $\{v_{ma}x\,(x)\}$ limites maximum et sur la base de la vitesse ($v_{act}$) du véhicule à la position ($x_{act}$) de circulation en cours du véhicule ou de la combinaison du véhicule tracteur et de la remorque selon la prescription de calcul suivante :

$$a_{x\,need}(x) = \frac{v(x)_{max^2} - v_{act^2}}{2 \cdot x}$$

i) et **en ce que** l'on effectue un réglage de la vitesse réelle seulement pour les positions (x) de circulation dans la section (x1, xn) de circulation, pour lesquelles une décélération longitudinale mais pas d'accélération longitudinale est nécessaire, et **en ce que**

j) on calcule une force ($F_{brems}$) de freinage nécessaire, qui est nécessaire pour obtenir la décélération ($a_{x\,max\,needed}$) nécessaire au maximum, sur la base de la masse ($m_{Fzg}$) du véhicule ou de la combinaison du véhicule tracteur et de la remorque, selon la prescription de calcul suivante :

$$F_{brems} = m_{Fzg} * a_{x\,max\,need}$$

k) et **en ce que**, si la force ($F_{brems}$) de freinage nécessaire ne peut pas être appliquée complètement par un actionnement actif d'un frein du véhicule ou de la combinaison du véhicule tracteur et de la remorque par le conducteur du véhicule et/ou par des forces à attribuer à des données de la section ($x_1$, $x_n$) de circulation, on produit la proportion, encore manquante par rapport à la force ($F_{brems}$) de freinage nécessaire de force de freinage, en commandant au sens du freinage au moins l'un des dispositifs suivants du véhicule, sans participation du conducteur du véhicule : un dispositif de frein continu, un moteur de traction, un dispositif de frein de service, un dispositif de frein de stationnement.

2. Procédé suivant la revendication 1, **caractérisé en ce que** la détection de la situation de circulation en cours du véhicule ou de la combinaison du véhicule tracteur et de la remorque comprend au moins ce qui suit : la détermination de la vitesse ($v_{act}$) en cours et/ou l'accélération ($a_{act}$) en cours du véhicule ou de la combinaison du véhicule tracteur et de la remorque, rapportée à la position ($x_{act}$) de circulation en cours du véhicule ou de la combinaison du véhicule tracteur et de la remorque.

3. Procédé suivant l'une des revendications précédentes, **caractérisé en ce que** procurer des informations sur le tracé de la section ($x_1$, $x_n$) de circulation se trouvant avant, à partir de la position ($x_{act}$) de circulation en cours du véhicule ou de la combinaison du véhicule tracteur et de la remorque, comporte, en outre, se procurer des informations sur la pente, l'inclinaison et/ou le coefficient de frottement de la section ($x_1$, $x_n$) de circulation se trouvant en avant.

4. Procédé suivant l'une des revendications précédentes, **caractérisé en ce que** se procurer des informations sur le tracé de la section ($x_1$, $x_n$) de circulation se trouvant avant, à partir de la position ($x_{act}$) de circulation en cours du véhicule ou de la combinaison du véhicule tracteur et de la remorque, s'effectue en s'aidant de dispositifs de bord propres au véhicule ou à la combinaison du véhicule tracteur et de la remorque et/ou en s'aidant de sources de données extérieures.

5. Procédé suivant l'une des revendications précédentes, **caractérisé en ce que** l'on produit des grandeurs caractéristiques représentant des potentiels de danger aux positions (x) de circulation associées, sur la base des décélérations {$a_x$ need (x)} longitudinales rapportées à la position (x) de circulation respective dans la section (x1, xn) de circulation se trouvant en avant.

6. Procédé suivant la revendication 5, **caractérisé en ce que**, si une grandeur caractéristique limite, qui représente un potentiel de danger limite déterminé, est dépassée par une grandeur caractéristique déjà avant d'atteindre la position (x) de circulation associée à cette grandeur caractéristique, on prend au moins l'une des mesures suivantes : émission d'un signal d'alerte acoustique et/ou optique pour le conducteur du véhicule, activation de dispositifs de protection vis-à-vis d'une collision, raidissement de la suspension du véhicule ou de la combinaison du véhicule tracteur et de la remorque, augmentation de la pression de freinage dans des cylindres de frein.

7. Procédé suivant l'une des revendications précédentes, **caractérisé en ce que** lors de la détermination des données de la section ($x_1$, $x_n$) de circulation, on prend en compte des interventions de freinage actives du conducteur du véhicule.

8. Procédé suivant l'une des revendications précédentes, **caractérisé en ce que**
dans la détermination des décélérations $\{a_x \text{ need }(x)\}$ longitudinales nécessaires, on prend en compte des données de freinage actives du conducteur du véhicule.

9. Procédé suivant l'une des revendications précédentes, **caractérisé en ce que**
l'on contrôle la disponibilité de dispositifs, qui servent à décélérer le véhicule ou la combinaison du véhicule tracteur et de la remorque.

10. Procédé suivant l'une des revendications précédentes, **caractérisé en ce que**
l'on contrôle des actionnements ou des activations par le conducteur du véhicule d'au moins des dispositifs suivants : ralentisseur, pédale de frein, système d'assistance à la conduite, pédale des gaz, blocage de différentiel.

11. Système pour empêcher un basculement d'un véhicule ou d'une combinaison d'un véhicule tracteur et d'une remorque dans des tournants, comportant au moins un système de réglage actionnant le dispositif de traction et/ou les freins du véhicule, qui, par des interventions de réglage s'effectuant automatiquement sans la participation d'un conducteur du véhicule, s'oppose à un danger de basculement du véhicule, commandé par un procédé suivant l'une des revendications précédentes.

12. Véhicule ayant un système suivant la revendication 11.

FIG.1

**Radar-Kamera**

$f(x) = C_0 \cdot C_1 x \cdot C_2 x^2 \cdot C_3 x^3$

Polynom 3. Ordnung

Pfad der Strassenmarkierungen

**Interner CAN**

**Bogenlauf:**

$$\kappa(x) = \frac{f''(x)}{(1 + f'(x)^2)^{\frac{3}{2}}}$$

Distanz x:

$x_1$

$x_2$

...

$x_n$

Maximale Geschwindigkeit für Nicht-Umkippen:

$$v_{max}(x) = \sqrt{\frac{a_{y\,max\,ROP}}{\kappa(x)}}$$

$v_{max\,ROP\,1}$

$v_{max\,ROP\,2}$

...

$v_{max\,ROP\,n}$

Erforderliche Verzögerung zum Erreichen der maximalen Geschwindigkeit:

$$a_{x\,need}(x) = \frac{v(x)_{max}^2 - v_{act}^2}{2 \cdot x}$$

$a_{x\,need\,1}$

$a_{x\,need\,2}$

...

$a_{x\,need\,n}$

Maximal benötigte Verzögerung:

$max(a_{x\,need}(x))$

Benutzung des ROP für die Verzögerungs-kontrolle

**ESP**

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004110809 A1